# EUROPEAN PATENT APPLICATION

(11) **EP 1 717 120 A2**
(43) Date of publication of application: **02.11.2006**
(21) Application number: 06008409.2
(22) Date of filing: 24.04.2006
(51) Int. Cl.: B60S 3/06

(54) **Car wash facility**

(30) Priority: 25.04.2005 DK 200500601
(71) Applicant: Ninki Holding ApS, 8800 Viborg (DK)
(72) Inventor: Mogensen, Kim Secher, 8800 Viborg (DK)
(74) Representative: Medenwaldt, Robin

(57) **Abstract**

Method and apparatus for washing a vehicle in a carwash with a rotating brush which is moved relatively to the vehicle, where the vehicle is washed with the brush in follow rotation when the brush is on its way up the rear end of the vehicle.

## Description

### Field of the Invention

The present invention concerns a washing facility for vehicles.

### Description of Prior Art

In carwashes, it is common to let a rotating brush run across the car in the washing facility. Such a facility is described in Norwegian patent application NO 129728. It is commonly known that antennae are in danger of being torn off the car, why it is generally observed that these are either dismounted during wash or lowered in a tube in the body. It is also prior art that there is a considerable risk of spoilers being torn off during washing. When such occurs, it entails surprisingly high repair costs, typically in the magnitude 2000 euro. The reason is that many spoilers are only glued onto the rear window, and that this glue loses its bonding ability with respect to the spoiler over time. Alternatively, the spoiler may be screwed, or screwed as well as glued. In these cases there is also a risk of the spoiler being torn off.

The problem has been described in JP 11 301 427 of Kazuaki Shinozaki, where as a solution it has been decided to let a horizontal brush travel from the front of the vehicle to the rear end of the vehicle, but not back again. It may thus be sufficient with a single travel of the washing brushes. In practice, however, this is unsuitable, as good washing properties are not achieved.

Therefore, it is the purpose of the invention to indicate another solution to this problem.

### Description of the Invention

The purpose is achieved by a method for washing a vehicle in a carwash with a horizontal or approximately horizontal rotating brush which is moved relatively to the vehicle, characterised in that the vehicle is washed with the brush in follow rotation when the brush is on its way up the rear end of the vehicle.

By "follow rotation" is meant a direction of rotation of the brush where the brush ends slide across the surface of the car in the same direction as the surface of the car is moving in relation to the brush. The force of the brush ends is thus furthering the movement of the brush in relation to the car. By "counterrotation" is meant a direction of rotation of the brush where the brush ends slide across the surface of the car in a direction opposite the direction in which the car is moving in relation to the brush. The force of the brush ends thus counteracts the movement of the brush across the car.

The solution to the above indicated purpose is very simple and was discovered by accident when the direction of brush rotation was changed in order to clean behind a towing hook and down into the hollow of the bumper of a stationcar. In this experiment, it was discovered that the forces on spoilers are far less than if the brush rotates in counterrotation, particularly on the spoilers provided at the upper edge of the rear window. By having a direction of rotation in follow rotation when the brush moves up along the rear end, the risk of tearing off spoilers with the brush is very much reduced.

It is not necessary that the brush is travelling up along the entire rear end in follow rotation. It is essential that the vehicle is only washed with the brush in follow rotation when the brush is on its way up the rear end of the vehicle around the areas of the vehicle which are usually used for providing a spoiler on the vehicle.

Spoilers are then also protected when the brush; after changing direction of movement at the rear end of the vehicle, is running in counterrotation over the initial short length where no spoiler is provided, whereafter the direction of rotation is changed from counterrotation to follow rotation. The follow rotation may e.g. continue from the rear end to the front end of the vehicle.

In the above mentioned Norwegian application NO 129728, there is disclosed a system with two brushes which can change the angle from vertical to horizontal and which are used for washing the sides of a vehicle as well as the top of the vehicle. One brush runs with oblique orientation up the rear end and thus only washes one side of the rear end, whereafter a second brush washes the other side of the rear end. The first brush runs at the rear end of the vehicle in follow rotation, whereby spoilers are protected by this brush, but since the subsequent inclining brush for washing the opposite side of the rear end washes the other side of the rear end with a counterrotative direction, there is a risk of damage to spoilers.
In order to perform the method described above, the invention includes a washing facility for washing vehicles, where the washing facility has a substantially horizontal rotating brush, which is arranged for rotating in both directions and adapted for vertical movement in dependence of the relative position of the brush in relation to the longitudinal axis of the vehicle, where the washing facility includes a control unit for controlling the rotation of the brush in dependence of the position of the brush relative to the vehicle and relatively to the movement of the brush in relation to the vehicle. The control unit is then programmed for follow rotation of the brush, when the brush is on its way up the rear end of the vehicle.

In an embodiment, where the brush is not rotating in follow rotation up along the entire rear end, the control unit is programmed for only follow rotation of the brush when the brush is on its way up the rear end of the vehicle around the areas of the vehicle which are usually used for providing a spoiler on the vehicle. The control unit may, for example, be programmed for counterrotation of the brush over an initial short length after changing the direction of movement at the rear end of the vehicle, e.g. the first 10-15 cm, and programmed for changing from counterrotation to follow rotation after this short length.

In a further embodiment, the control unit is programmed for continued follow rotation from the rear end to the front end of the vehicle.

The choice of counterrotation at the movement up along the rear end and always applied previously is a matter of history. Previously, the rotating brush was suspended in wires with a counterweight at the opposite end outbalancing the brush. The wires were running across rollers in which they were secured in due to the gravity of the brush and the counterweight. If a brush was rotating in follow rotation on its way up along the rear end of the car, there could be a tendency of the brush so as to say crawling up the rear of the car, causing slacking of the tension of the wire, and possibly causing the wire to jump off the roller, and the machine had to be stopped and repaired. For historical reasons, the counterrotation on the way up the rear and front ends of the car has therefore been maintained. However, carwashes have been changed so that the brush is suspended in chains or other systems which can resist the action of force of the brush in upwards direction. There is thus a possibility with new facilities to run with the brush in follow rotation up the rear end of the car without risking breakdown. Even though this possibility has existed now for several years, counterrotation up along the rear end of the car in washing has not be used in commercial washing facilities.

### Short Description of the Drawing

The invention is described in more detail with reference to the drawing, where:
FIG. 1 shows a first embodiment according to prior art;
FIG. 2 shows a second embodiment according to prior art; and
FIG. 3 shows a rotation according to the invention.

### Detailed Description of the Invention

The inventive solution to the problem has required that the direction of the rotation during the entire washing process in known washing facilities was studied in detail. In the following Figures, a horizontal arrow shows the relative direction of running of the machine relative to the car, and an upwards directed or downwards directed arrow shows if the machine is lifting or lowering the washing brush.

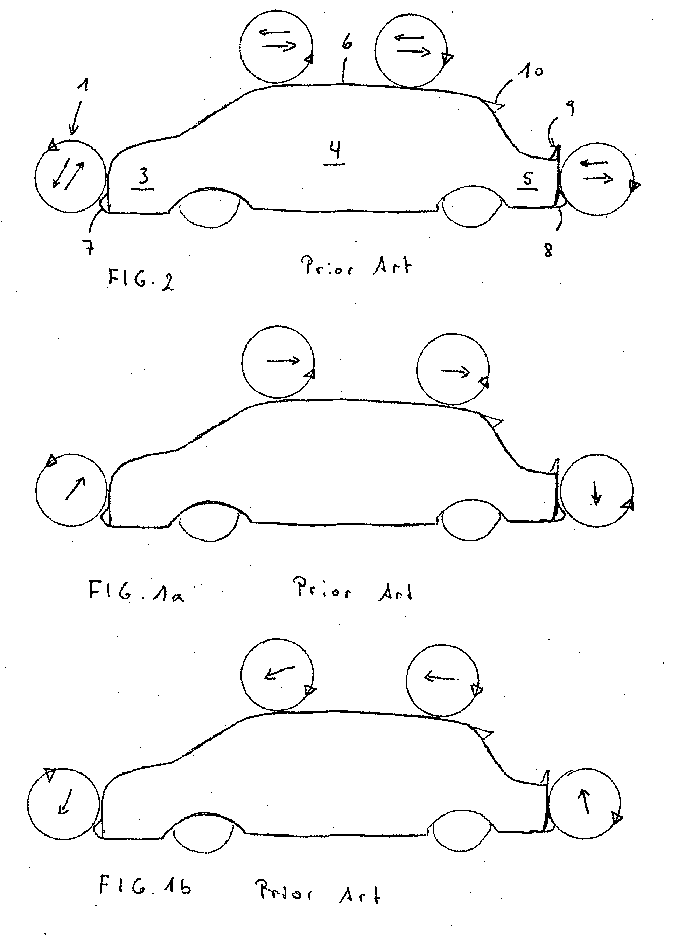

Largely all washing facilities wash according to two pattern types. By one type, counterrotation is used all the time. This is illustrated in Fig. 1. The rotation 2 of the washing brush 1 starts at the front end 3 of the car 4, where the car 1 rotates in counterrotation, which is illustrated in Fig. 1 a, and continues until the brush 1 reaches the rear end 5 of the car 4. Here, the brush 1 changes direction for travelling across the car to the front end 3 in counterrotation, which is illustrated in Fig. lb.

By the second type, the rotation of the brush 1 changes from counterrotation to follow rotation when the brush 1 reaches a point about the middle of the roof 6 of the car 4. This is illustrated on Fig. 2. Typically, there is commenced at the front end 3 of the car 4, and the brush 1 has counterrotation for washing efficiently under the bumper 7. The counterrotation is maintained until the brush 1 reaches the middle of the car roof 6, whereafter the direction is changed to follow, which is maintained until the washing brush 1 reaches the rear end 5 of the car 4 where washing is performed efficiently under the rear bumper 8. The direction of rotation of the brush 1 is then maintained for continuing the efficient rear end washing, but the linear direction of movement of the brush in relation to the car 4 is changed, meaning that the follow rotation is changed to counterrotation. This counterrotation continues up along the rear end 5 of the car until the brush 1 reaches the middle of the roof 6, where the direction of rotation is changed again for the rest of the path.

It is the counterrotation at the travel of the brush 1 up along the rear end 5 of the car 4 that often causes damage to the spoiler 9,10 of the car 4. An improvement is then achieved by the following washing method. According to the invention, the sequence where the lower part of the rear end 5 with the bumper 8 is washed efficiently in counterrotation is maintained. However, when the brush starts to move from the lower part of the rear end 5 towards the roof 6, the direction of rotation of the brush 1 is changed to follow rotation, as it has appeared to be far gentler for spoilers than counterrotation.

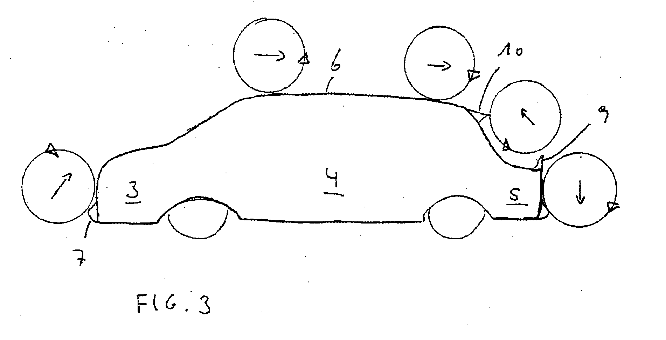

An entire washing cycle may occur e.g. as shown on Fig. 3. The brush 1 is washing with counterrotation up along the front end 3 of the car 4 in order to attain an efficient wash around the bumper 7. The counterrotation continues until the brush 1 reaches the car roof 6 where the rotation of the brush 1 changes its direction to follow rotation which is maintained until the brush reaches the rear end 5. When the brush then travels back up along the rear end 5 of the car, it is necessary to change the direction of rotation in order to achieve a follow rotation. This changing can be performed as soon as the brush 1 changes the direction of movement in relation to the car 4. Alternatively, the change can be performed at a time before the brush 1 reaches the spoiler 9 of the tailgate or a window spoiler 10. It is essential that the spoiler 9, 10 is washed in follow rotation. The movement during the remaining washing process is not decisive in connection with the invention and may e.g. be chosen as continued follow rotation.

## Claims

1. A method for washing a vehicle in a carwash with a horizontal or substantially horizontal rotating brush which is moving relatively to the vehicle, **characterised in that** the vehicle is washed with the brush in follow rotation, when the brush is on its way up the rear end of the vehicle.

2. Method according to claim 1, **characterised in that** the vehicle is only washed with the brush in follow rotation when the brush is on its way up the rear end of the vehicle around the areas of the vehicle which are usually used for providing a spoiler on the vehicle.

3. Method according to claim 1 or 2, wherein the brush after change in direction of movement at the rear end of the vehicle is running in counterrotation over a short length, whereafter the direction of rotation is changed from counterrotation to follow rotation.

4. Method according to any preceding claim, wherein the follow rotation continues from the rear end to the front end of the vehicle.

5. Washing facility for washing vehicles, where the washing facility has a horizontal or substantially horizontal rotating brush, which is arranged for rotating in both directions and adapted for vertical movement in dependence of the relative position of the brush in relation to the longitudinal axis of the vehicle, where the washing facility includes a control unit for controlling the rotation of the brush in dependence of the position of the brush relative to the vehicle and relatively to the movement of the brush in relation to the vehicle, **characterised in that** the control unit is programmed for follow rotation of the brush, when the brush is on its way up the rear end of the vehicle.

6. Washing facility according to claim 5, **characterised in that** the control unit is programmed for exclusive follow rotation of the brush when the brush is on its way up the rear end of the vehicle around the areas of the vehicle which are usually used for providing a spoiler on the vehicle.

7. Washing facility according to claim 5 or 6, **characterised in that** the control unit is programmed for counterrotation of the brush over the initial short length after changing the direction of movement at the rear end of the vehicle, and programmed for changing from counterrotation to follow rotation after this short length.

8. Washing facility according to claim 5, 6 or 7, **characterised in that** the control unit is programmed for continued follow rotation from the rear end to the front end of the vehicle.
